# EUROPEAN PATENT SPECIFICATION

(11) **EP 0 548 428 B1**
(45) Date of publication and mention of the grant of the patent: **02.08.1995**
(21) Application number: 91312047.3
(22) Date of filing: 24.12.1991
(51) Int. Cl.: F16H 47/02, B60K 17/10

(54) **Transmission system for axles**
Getriebesystem für Achsen
Système de transmission pour essieux

(43) Date of publication of application: 30.06.1993
(73) Proprietor: KANZAKI KOKYUKOKI MFG. CO., LTD., Amagasaki-Shi, Hyogo-Ken (JP)
(72) Inventor: Azuma, Toshiro, Sanda-shi, Hyogo-Ken (JP); Okada, Hideaki, Takarazuka-shi, Hyogo-ken (JP); Ohashi, Ryota, Kobe-shi, Hyogo-ken (JP)
(74) Representative: Low, Peter John

(56) References cited:
- GB-A- 2 243 352
- US-A- 3 293 848
- US-A- 4 891 943

## Description

### Field of the Invention

The present invention relates to a transmission system for axles of motor vehicles such as motor tractors and the like and more particularly to a transmission system for axles of motor vehicles comprising a housing of the split type composed of upper and lower shell members wherein a L-shaped block or manifold is fixed, a swash plate type hydraulic motor or a swash plate type piston motor for driving axles is horizontally mounted on a vertically extending portion of the block or manifold, a hydraulic pump for the swash plate type piston motor is vertically mounted on a horizontally extending portion thereof, and first and second slots for said motor extend in the form of a circular arc on the vertically extending portion thereof.

### Description of Prior Art

A transmission system of the above type is known from US-A-4891943. The transmission system of this type comprising an assembly of a hydraulic pump, a swash plate type hydraulic motor and a manifold having the pump and motor fixed thereto is compacter and more useful than that of the type comprising a hexahedral manifold of the vertical type, a hydraulic pump fixed to the front end surface of the manifold and a swash plate type hydraulic motor fixed to the rear end surface thereof and than that of the type comprising the same manifold, and a hydraulic pump and a swash plate type hydraulic motor mounted on an upper and a lower part in one end surface of the manifold. The transmission system of the type having a motor and a pump fixed to the front and rear side surfaces of hexahedral manifold must have a plurality of slots and a plurality of passages of hydraulic fluid both for the motor, and a plurality of slots and a plurality of passages of hydraulic fluid both for the pump, all arranged in the direction of the thickness of the manifold, so that the manifold must have a sufficiently great thickness to afford the required strength, and the assembly has a significant length. The transmission system of the type having a pump and a motor vertically side by side mounted on one end surface of the manifold has a pronounced height. When an L-shaped manifold is used, a pump can be mounted on a horizontal portion of the manifold and a motor on a vertical portion thereof, in other words the pump and motor can be compactly arranged on upper and lower parts of the manifold. Since only the slots and passages of hydraulic fluid for the motor are formed on a vertical portion of the L-shaped manifold, the vertical portion thereof can be thin-walled and an assembly can be of a short length.

However, in the conventional transmission system of the type described at the beginning of this section, two opposed arc-shaped slots for the swash plate type piston motor which are formed on a vertical portion of an L-shaped manifold extend in both a space defined by the upper shell member of the housing and a space defined by the lower shell member thereof. Such formation of the slots results in unavoidable inclination of a swash plate with respect to a perpendicular axis in order to operate the motor piston in the desired manner.

On rotation of the swash plate type piston motor, a radial load is caused due to a thrust load resulting from the motion of the motor piston and due to the inclination of the swash plate. The radial load is induced by 360° circular motion of motor piston and is applied in a direction from a forwardly inclined semicircular zone of the swash plate (toward the forward end of the piston) to the other semicircular zone thereof.

Thus the conventional formation of slots results in concentrated application of radial load to either the upper shell member or the lower shell member of the housing through the swash plate. The shell member to which the radial load is concentratedly applied is required to have strength sufficient to withstand the load. Therefore the production costs are increased if a shell member of great thickness or made of a material of high strength is used to meet the requirement.

It is an object of the invention to provide a transmission system for axles of the type described at the beginning of this section which system enables substantially uniform dissipation of radial load over the upper and lower shell members of the housing, thereby leading to a decrease of costs.

### Summary of the Invention

To achieve the above object of the invention, there is provided a transmission system for axles according to the invention which comprises a housing of the split type composed of upper and lower shell members wherein a L-shaped manifold is fixed, a swash plate type piston motor for driving axles is horizontally mounted on a vertically extending portion of the manifold, a hydraulic pump for the swash plate type piston motor is vertically mounted on a horizontally extending portion thereof, and first and second slots for the swash plate type piston motor extend in the form of a circular arc on the vertically extending portion thereof, the system being characterized in that the first slot for the swash plate type piston motor is horizontally formed at a position in the vertical portion of the manifold which position exists inside the upper shell member; that the second slot for the swash plate type piston motor is horizontally formed at a position in the vertical portion of the manifold which position exists inside the lower shell member; and that the surface of the swash plate for the motor is inclined around a vertical axis.

For the reason described later, it is desirable to make the first and second slots gradually deeper toward a side having ports leading to the hydraulic pump from the side opposed to said side.

### Brief Description of the Drawings

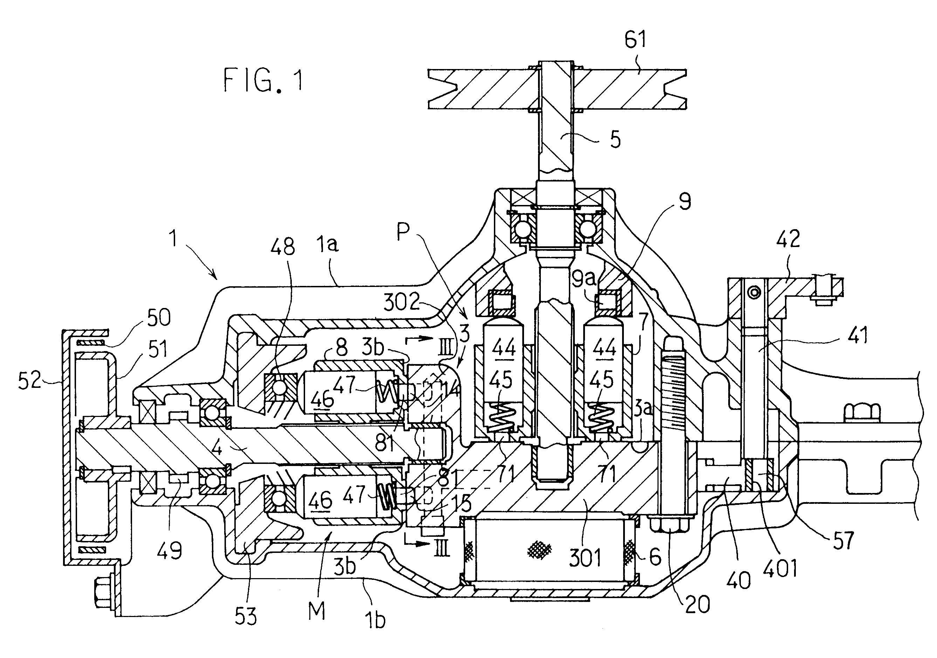

Fig. 1 schematically shows in longitudinal section one embodiment according to the apparatus of the present invention.

Fig. 2 is a plan view of the apparatus of Fig. 1 partly shown in section.

Fig. 3 schematically shows an L-shaped manifold in the apparatus of Fig. 1 when viewed along the line III-III in Fig. 1.

Fig. 4 is a sectional view taken along the line IV-IV in Fig. 3.

Fig. 5 is a sectional view taken along the line V-V in Fig. 3.

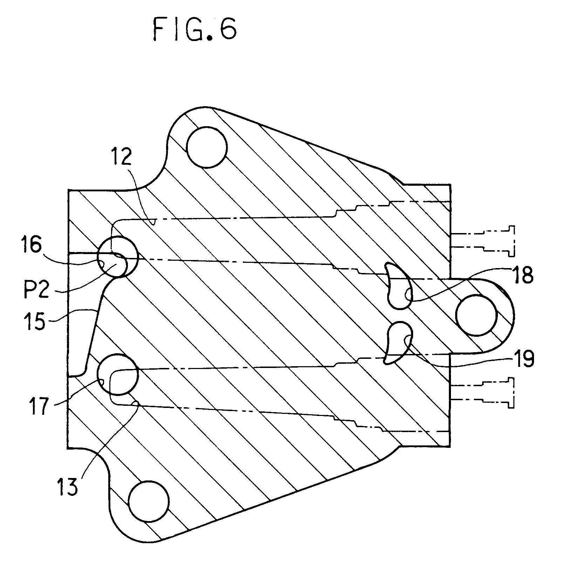

Fig. 6 is a sectional view taken along the line VI-VI in Fig. 3.

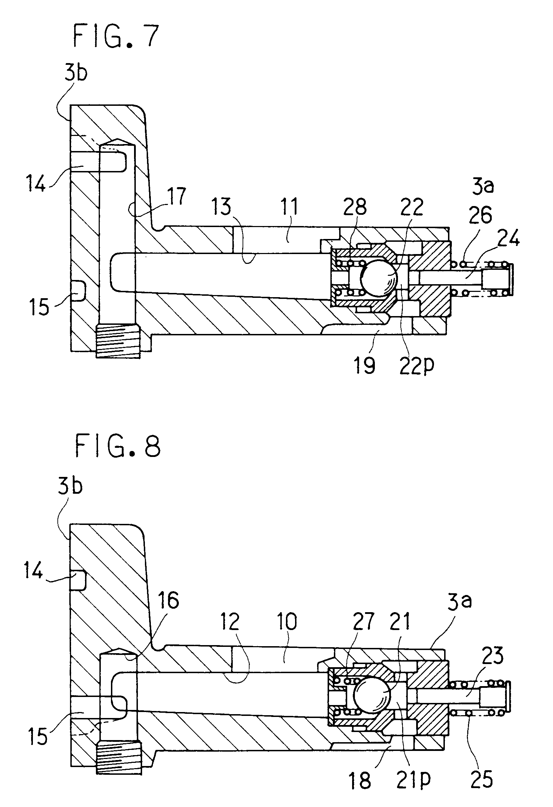

Fig. 7 is a sectional view taken along the line VII-VII in Fig. 4.

Fig. 8 is a sectional view taken along the line VIII-VIII in Fig. 4.

Fig. 9-a (elevation view) and Fig. 9-b (plan view) schematically show the directions of application of radial load during the rotation of hydraulic motor.

### PREFERRED EMBODIMENT OF THE INVENTION

In the drawings, a housing 1 is of the split type and is composed of an upper shell member 1a and a lower shell member 1b.

The housing 1 has an L-shaped block or manifold 3 fixed thereto by a bolt 20.

A swash plate type hydraulic motor or a swash plate type piston motor M for axles 56L, 56R of motor vehicles such as motor tractors is horizontally mounted on a front end surface 3b of a vertically extending portion 302 of the manifold 3. A hydraulic pump P for the swash plate type piston motor M is mounted on an upper surface 3a of a horizontally extending portion 301 of the manifold 3.

A hydraulic fluid is held in the housing 1.

The motor M includes a cylinder block 8, a piston 46 biassed by a spring 47 toward the forward end, a fixed swash plate 53, a thrust bearing 48 and a rotary shaft 4. The swash plate 53 is attached to the housing 1. The rotary shaft 4 has a forward end protruding outside from the housing 1 at the front ends of upper and lower shell members 1a, 1b connected together. A brake drum 51 is mounted on the projected end of the shaft 4. Indicated at 50 is a hand brake, and at 52 a brake case. The shaft 4 has a gear 49 which engages a gear 59 on a counter shaft 60. A gear 58 on the counter shaft 60 is drivingly connected to the gear 59 and is in mesh with a ring gear 54 in a differential gear unit 55 for the axles 56L, 56R.

A movable swash plate type hydraulic pump or a movable swash plate type piston pump can be advantageously used as the hydraulic pump P. This type of pump is shown as the pump P in the embodiment illustrated in the drawings. The illustrated movable swash plate type piston pump P includes a cylinder block 7, a piston 44 biassed by a spring 45 toward the forward end, a movable swash plate 9, a thrust bearing 9a and a rotary shaft 5. The rotary shaft 5 is projected at its forward end outside the upper shell member 1a of the housing 1. An input pulley 61 is attached to the projected forward end of the shaft 5. Power is transmitted from an engine (not shown) of a motor tractor or the like to the pulley 61.

A first slot 10 and a second slot 11 for the pump P are formed on an upper surface of the horizontal portion 301 of the manifold 3 or on the surface 3a on which the pump P is mounted The first and second slots 10, 11 extend in the form of a circular arc which corresponds to a line of circular motion made by a port 71 of the cylinder block 7 being rotated. One of the slots 10, 11 is formed for a hydraulic fluid and the other for a return fluid.

A first slot 14 for the motor M is formed on the front end surface of the vertical portion 302 of the manifold 3 or the surface 3b for mounting the motor on the side of upper shell member 1a, and a slot 15 for the motor M is formed on the front end surface thereof or the surface 3b for mounting the motor on the side of lower shell member 1b. The first and second slots 14, 15 horizontally extend in the form of a circular arc which corresponds to a line of circular motion made by a port 81 of the cylinder block 8 being rotated. One of the slots 14, 15 is formed for a hydraulic fluid and the other for a return fluid.

The slots 10, 11 for the pump are in communication with the slots 15, 14 respectively for the motor M via passages in the manifold 3. More specifically, the slots 10, 11 communicate respectively with passages 12, 13 longitudinally extending within the horizontal portion 301 of the manifold 3. The slots 15, 14 communicate respectively with passages 16, 17 vertically extending within the vertical portion 302 of the manifold 3. The passages 12 and 16 cross each other for communication, and the passages 13 and 17 cross each other for communication.

The pump P is operated to circulate the hydraulic fluid between the pump P and the motor M, whereby the motor M is rotated. The movable swash plate 9 of the pump P is caused to change its inclining angle by an arm 66 to alter the number of revolution of the shaft 4 for the motor M, so that the axles 56L, 56R are rotated at a varied speed.

The following advantages are given by the arrangement of the first slot 14 for the motor M on the surface 3b for mounting the motor in the vertical portion 302 of the manifold 3 on the side of upper shell member 1a, and by the arrangement of the second slot 15 for the motor M on the surface 3b for mounting the motor in the vertical portion 302 thereof on the side of lower shell member 1b.

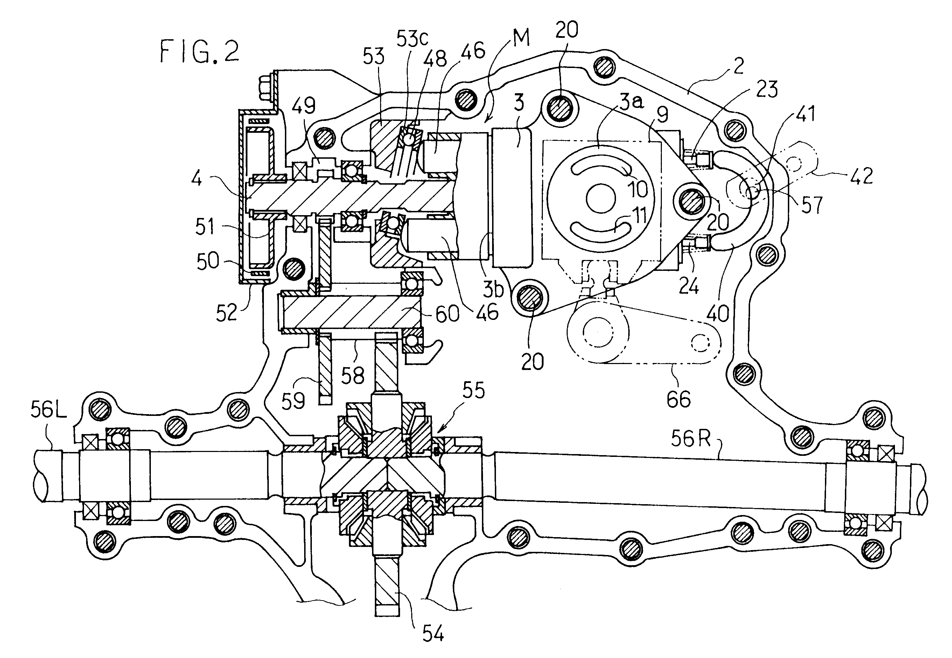

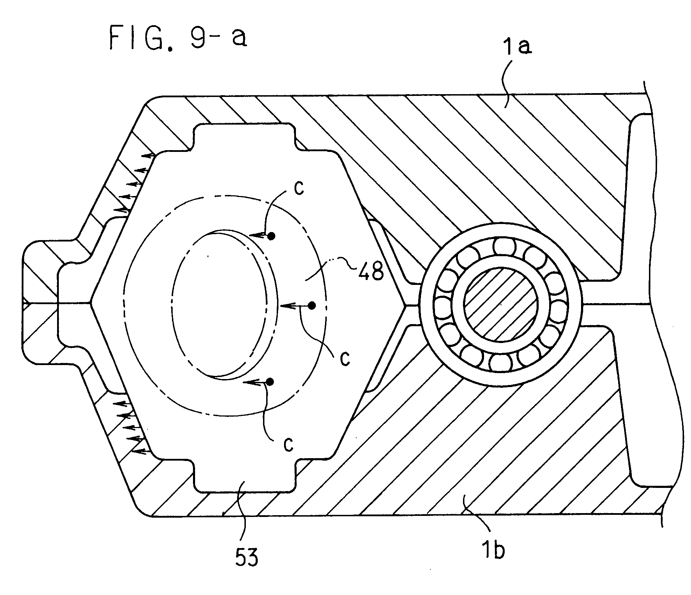

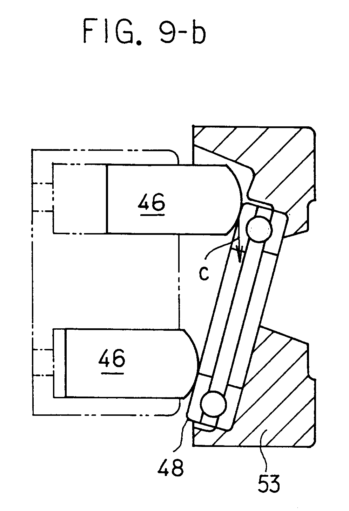

When the first slot 14 and the second slot 15 for the motor M are formed as described above, the swash plate 53 for the motor M has a surface 53C inclined around a perpendicular axis as shown in Fig. 2 to operate the piston 46 in the desired manner. The radial load during the rotation of the motor M is applied in the direction of arrow C from the right semicircular zone of the swash plate 53 to the left semicircular zone thereof as shown in Fig. 9-a (elevation view) and in the direction of arrow C from an upper position downward as depicted in Fig. 9-b (plan view). Thus the radial load applied from the motor M to the housing 1 is diffused substantially uniformly throughout the upper shell member 1a and the lower shell member 1b. This factor can reduce the costs for manufacturing the transmission system of the type described hereinbefore for axles.

The above arrangement of the first and second slots 14, 15 for the motor M enables preferred use of the lower slot 15 as a passage of a pressurized hydraulic fluid and the upper slot 14 as a passage of a return fluid in driving forward a motor tractor or the like. The lower slot 15 is formed at a lower position in the vertical portion of the L-shaped manifold 3 namely, viz., a position where a passage has a high rigidity due to the structure. The slot 15 thus arranged is suited as a passage of a pressurized hydraulic fluid in forward driving which occurs more frequently than rearward driving. The upper slot 14 may be used as a passage of a pressurized hydraulic fluid in rearward driving and the lower slot 15 may be used as a passage of a return fluid in rearward driving. These arrangements pose no trouble because rearward driving is less frequently occasioned than forward driving. In either case, a hydraulic fluid can be supplied or discharged by conventional means through the slots 14, 15 as the passages of a pressurized hydraulic fluid and a return fluid.

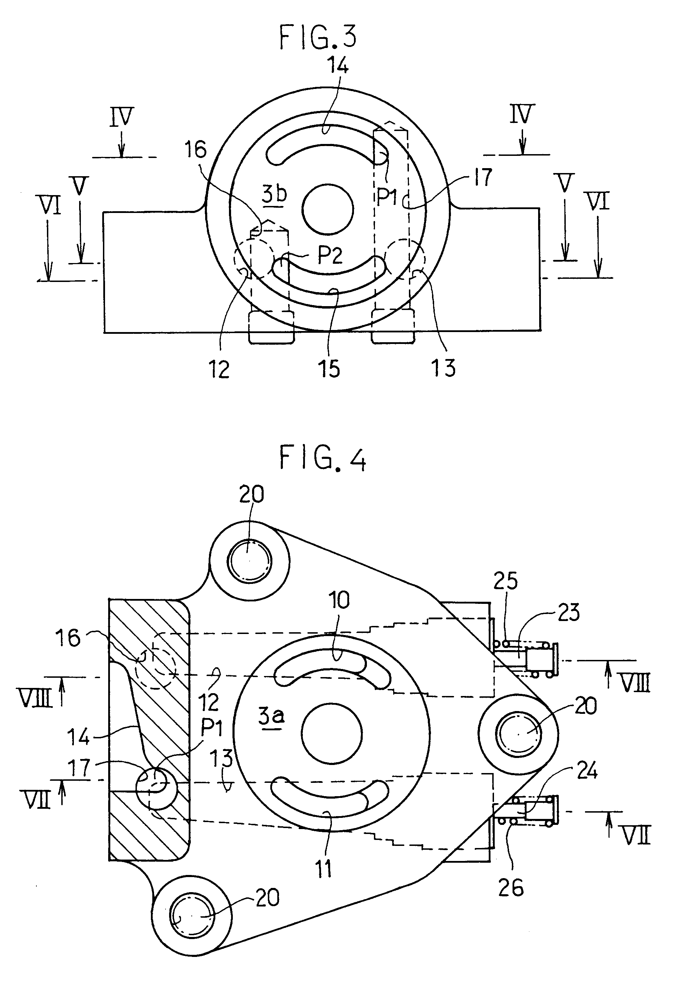

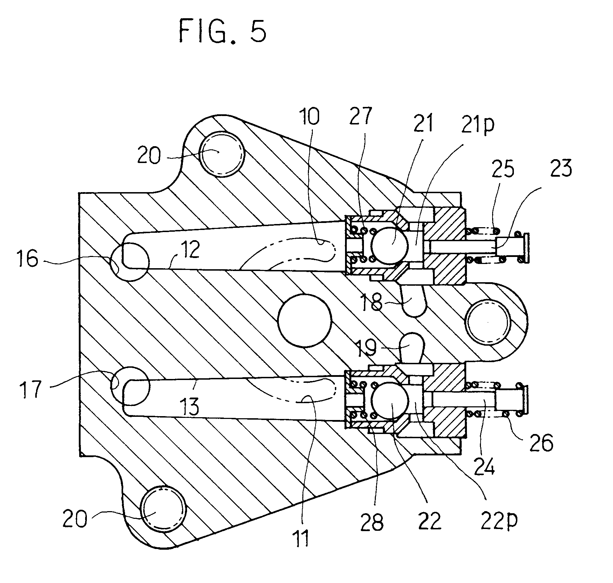

It is preferable that the first slot 14 and the second slot 15 be gradually deeper toward a side having ports (P1, P2) leading to the hydraulic pump P from the side opposed thereto as shown in Figs. 4 and 5. The foregoing structure of the slots 14, 15 induces smooth flow of a pressurized fluid between the pump P and the motor M, thereby preventing cavitation which leads to improved volumetric efficiency of the apparatus of the invention.

A check valve 21 is provided in a passage 12 for communication between the slot 10 for the pump P and the slot 15 for the motor M. A check valve 22 is provided in a passage 13 for communication between the slot 11 for the pump P and the slot 14 for the motor M. The check valves 21, 22 have ports 21P, 22P which communicate with the passages 18, 19, respectively. The passages 18, 19 are in communication with the interior of the housing 1 by way of a filter 6. During the rotation of the motor M, the pressurized hydraulic fluid in the passage 12 (or 13) is gradually lost due to its continuous leakage from a sliding portion during rotation. The hydraulic fluid may be supplied by the valve 22 (or 21), adapted to be opened automatically on leakage, in the passage 13 (or 12) of a return fluid. The check valves 21, 22 may be also made open by pushing the rods 23, 24 for leftward retraction in Fig. 5. When the check valves 21, 22 are brought to an opened state, the hydraulic fluid in the passages 12, 13 is caused to flow into the interior of the housing 1 through the passages 18, 19. The rods 23, 24 are retracted simultaneously by a push member 40. The push member 40 is pushed by an arm 42 through a rotary shaft 41 attached thereto and an eccentric pin 57. The eccentric pin 57 extends integrally from the shaft 41 and is movably engaged in a hole 401 of the push member 40. The arm 42 is held by retaining means (not shown) in a position in which the rods 23, 24 are retracted. When the check valves 21, 22 are in an opened state, the axles 56L, 56R for motor tractors or the like with the transmission system of the invention mounted thereon are in a disengaged state for release from the engagement with the shaft 4 for driving. In this state, the motor tractor or the like can be drawn by another motor vehicle.

When the arm 42 is released from the foregoing state held by the retaining means, the rods 23, 24 are brought into an inoperative position by springs 25, 26, and the check valves 21, 22 are brought into a closed state by springs 27, 28.

## Claims

1. A transmission system for axles of a motor vehicle which comprises a housing (1) of the split type composed of upper and lower shell members (1a, 1b) wherein a L-shaped manifold (3) is fixed, a swash plate type piston motor (M) for driving axles (56L, 56R) is horizontally mounted on a vertically extending portion (302) of the manifold (3), a hydraulic pump (P) for the swash plate type piston motor (M) is vertically mounted on a horizontally extending portion (301) thereof, and first and second slots (14, 15) for the swash plate type piston motor (M) extend in the form of a circular arc on the vertically extending portion (302) thereof, the system being characterized in that the first slot (14) for the swash plate type piston motor (M) is horizontally formed at a position in the vertical portion (302) of the manifold (3) which position exists inside the upper shell member (1a); that the second slot (15) for the swash plate type piston motor (M) is horizontally formed at a position in the vertical portion (302) of the manifold (3) which position exists inside the lower shell member (1b); and that the surface of the swash plate (53) for the motor (M) is inclined around a vertical axis.

2. A transmission system according to claim 1 wherein the first slot (14) and the second slot (15) are gradually deeper toward a side having ports (P1, P2) leading to the hydraulic pump (P) from the side opposed thereto.

## Patentansprüche

1. Übertragungssystem für Wellen eines Motorfahrzeugs mit einem geteilten Gehäuse (1) mit einem oberen und mit einem unteren, schalenförmigen Gehauseteil (1a, 1b), in dem ein L-förmiges Rohrstück (3) befestigt ist, ferner mit einem Taumelscheiben-Kolbenmotor (M) für den Antrieb von Wellen (56L, 56R), der horizontal an einem sich vertikal erstreckenden Teil (302) des Rohrstücks (3) befestigt ist, mit einer Hydraulikpumpe (P) für den Taumelscheiben-Kolbenmotor (M), die vertikal an einem sich davon horizontal erstreckenden Teil (301) befestigt ist, und mit einem ersten und einem zweiten Schlitz (14, 15) für den Taumelscheiben-Kolbenmotor (M), die sich in Form eines kreisförmigen Bogens an dem sich vertikal erstrekkenden Teil (302) erstrecken,
**dadurch gekennzeichnet,**
daß der erste Schlitz (14) für den Taumelscheiben-Kolbenmotor (M) horizontal in einer Position im vertikalen Teil (302) des Rohrstücks (3) geformt ist, die innerhalb des oberen, schalenförmigen Gehäuseteils (1a) besteht, daß der zweite Schlitz (15) für den Taumelscheiben-Kolbenmotor (M) horizontal in einer Position im vertikalen Teil (302) des Rohrstücks (3) geformt ist, die innerhalb des unteren, schalenförmigen Gehäuseteils (1b) besteht, und daß die Oberfläche der Taumelscheibe (53) für den Motor (M) um eine vertikale Achse geneigt ist.

2. Übertragungssystem nach Anspruch 1,
**dadurch gekennzeichnet,**
daß der erste Schlitz (14) und der zweite Schlitz (15) graduell tiefer sind, und zwar in Richtung auf eine Seite mit Öffnungen (P1, P2), die von der gegenüber liegenden Seite zu der Hydraulikpumpe (P) führen.

## Revendications

1. Système de transmission pour essieux d'un véhicule à moteur, qui comprend un carter (1) du type à joint composé de coquilles supérieure et inférieure (1a,1b) dans lequel est fixé un distributeur en forme de L (3), un moteur à piston du type à plaque oscillante (M) pour l'entraînement des essieux (56L,56R) est monté horizontalement sur une partie verticale (302) du distributeur (3), une pompe hydraulique (P) pour le moteur à piston du type à plaque oscillante (M) est montée verticalement sur une partie horizontale (301) du distributeur, et une première et une deuxième lumières (14,15) pour le moteur à piston à plaque oscillante (M) s'étendent en forme d'arc de cercle sur la partie verticale (302) du distributeur, le système étant caractérisé en ce que la première lumière (14) pour le moteur à piston à plaque oscillante (M) est formée horizontalement à une certaine position dans la partie verticale (302) du distributeur (3), cette position se trouvant à l'intérieur de la coquille supérieure (1a) ; en ce que la deuxième lumière (15) pour le moteur à piston à plaque oscillante (M) est formée horizontalement à une certaine position dans la partie verticale (302) du distributeur (3), cette position se trouvant à l'intérieur de la coquille inférieure (1b) ; et en ce que la surface de la plaque oscillante (53) du moteur (M) est inclinée autour d'un axe vertical.

2. Système de transmission suivant la revendication 1, dans lequel la première lumière (14) et la deuxième lumière (15) augmentent progressivement de profondeur vers un côté respectif comportant un passage respectif (P1,P2) aboutissant à la pompe hydraulique (P), lesdits côtés respectifs étant mutuellement opposés.
